Europäisches Patentamt

European Patent Office

Office européen des brevets

(11) Publication number: **0 088 546**
**B1**

(12) **EUROPEAN PATENT SPECIFICATION**

(45) Date of publication of patent specification: **03.09.86**

(51) Int. Cl.⁴: **C 08 G 63/60, C 08 G 63/34**

(21) Application number: **83300858.4**

(22) Date of filing: **18.02.83**

(54) **Preparation of aromatic polyesters by direct polycondensation.**

(30) Priority: **08.03.82 US 355991**
**08.03.82 US 355992**

(43) Date of publication of application:
**14.09.83 Bulletin 83/37**

(45) Publication of the grant of the patent:
**03.09.86 Bulletin 86/36**

(84) Designated Contracting States:
**DE FR GB IT NL**

(56) References cited:
**GB-A-2 058 102**
**US-A-3 637 595**
**US-A-4 093 595**
**US-A-4 349 659**

(73) Proprietor: **CELANESE CORPORATION**
**1211 Avenue of the Americas**
**New York New York 10036 (US)**

(72) Inventor: **East, Anthony J.**
**62 Niles Avenue**
**Madison New Jersey (US)**

(74) Representative: **Downer, John Michael et al**
**Imperial Chemical Industries PLC Legal**
**Department: Patents PO Box 6 Bessemer Road**
**Welwyn Garden City Herts, AL7 1HD (GB)**

Courier Press, Leamington Spa, England.

# 0 088 546

**Description**

The present invention relates to a process for preparing melt-processable aromatic polyesters via the direct condensation of aromatic hydroxy acids, optionally together with aromatic diols and aromatic diacids.

Wholly aromatic polyester resins, with the aromatic polyester being considered to be "wholly" aromatic in the sense that each moiety present contributes at least one aromatic ring to the polymer backbone, have long been known. For instance, 4-hydroxybenzoic acid homopolymer and copolymers have been provided in the past and are commercially available. Those wholly aromatic polyesters normally encountered in the prior art have tended to be somewhat intractable in nature and to present substantial difficulties if one attempts to melt process the same while employing conventional melt-processing procedures. Such polymers commonly are crystalline in nature, relatively high melting or possess a decomposition temperature which is below the melting point, and when molten frequently exhibit an isotropic melt phase. Moulding techniques such as compression moulding or sintering may be utilized with such materials; however, injection moulding, melt spinning, etc, commonly have not been viable alternatives or when attempted commonly have been accomplished with difficulty.

Wholly aromatic polyester resins and in particular such resins which exhibit melt anisotropy are now well known. For example, United States Patent No. 4 161 470 discloses a polyester of 6-hydroxy-2-naphthoic acid and para-hydroxybenzoic acid. United States Patent No. 4 219 461 discloses a polyester of 6-hydroxy-2-naphthoic acid, para-hydroxybenzoic acid, aromatic diol, and aromatic acid. United States Patent No. 4 256 624 discloses a polyester of 6-hydroxy-2-naphthoic acid, an aromatic diol and an aromatic diacid. Each of these polyesters exhibits an anisotropic melt phase and is capable of readily undergoing melt processing to form quality fibres, moulded articles, etc.

An established procedure for preparing aromatic polyesters of fibre-forming molecular weight is by thermally reacting acetates with carboxylic acids. In other words, the aromatic hydroxy groups are acetylated. The use of acetylated reactants has been of utmost importance when preparing a polyester of an aromatic hydroxy acid since certain aromatic hydroxy acid compounds tend to decarboxylate upon direct esterification. For example, para-hydroxybenzoic acid is notorious for severe decarboxylation upon attempted direct esterification. Decarboxylation adversely effects the yield of the process, the nature and composition of the final product, and the economic viability of the process.

A reaction involving acetylated reactants, however, liberates acetic acid which is corrosive and thus requires the use of special corrosion resistant equipment. A further disadvantage is that the esterified or acetylated reactants are most costly than the unesterified reactants. Accordingly, a polyesterification involving an aromatic hydroxy acid wherein all hydroxy and acid moieties are efficiently and effectively reacted directly would be of advantage since the high cost of using esterified products would be avoided and by-product water presents far less of a disposal problem than the acetic acid involved with ester reactants.

The polycondensation of a phenolic moiety with an aromatic carboxylic acid moiety, in general, has been found to be impracticable or simply not to work. However, some limited success has been achieved.

For example, United States Patent No. 4 093 595 discloses a catalytic procedure for the preparation of polyesters from (1) dihydric phenols and (2) aromatic dicarboxylic acids by direct polymerisation in the presence of an antimony, tin or titanium catalyst. The patent does not, however, address the problem of aromatic hydroxy acid decarboxylation upon direct esterification, nor suggests any method for the direct formation of polyesters such as those disclosed in the aforenoted United States Patent No. 4 161 470. Dihydric phenols and aromatic dicarboxylic acids are the only reactants used.

William W Lowrance, Jr, in *Tetrahedron Letters,* No. 37, pp. 3453—3454 (1971), discloses that phenol esters such as phenyl benzoates can be prepared by direct esterification upon refluxing a solution containing phenol, benzoic acid and catalytic amounts of boric and sulphuric acids. The article does not pertain to the preparation of polyesters or to the direct reaction of aromatic hydroxy acids.

Higashi et al in *Journal of Polymer Science: Polymer Letters Edition,* Volume 18, 385—388 (1980), disclose that aromatic polyesters can be prepared directly from aromatic hydroxy acids such a p- and m-hydroxybenzoic acids, as well as a combination of dicarboxylic acids and bisphenols, by conducting the polycondensation in the presence of hexachlorocyclotriphosphatriazene in pyridine. The use of such a promoter, however, has many disadvantages, e.g. cost.

Thus, an easy and economically attractive process for preparing melt-processable, aromatic hydroxy acid containing polyesters via the direct polycondensation thereof is heretofore unknown to the prior art.

It has now surprisingly and unexpectedly been found that wholly aromatic polyesters of aromatic hydroxy acids can be effectively prepared by direct polycondensation.

According to the present invention there is provided a process for preparing a wholly aromatic polyester comprising reacting in the presence of 0.001 to 5% by weight of a metallic compound selected from the group consisting of salts, oxides of organometallic derivatives of antimony, titanium, tin and germanium.

at least one hydroxynaphthoic acid together with either:

(a) at least one hydroxybenzoic acid, or

(b) at least one aromatic dicarboxylic acid and at least one aromatic diol to form the aromatic polyester.

2

Preferably the temperature of reaction is sufficient to maintain at least one reactant and the resulting polyester in a molten condition. By the process of the invention the hydroxynaphthoic acid has been found not to decarboxylate. An effective and efficient process of direct polycondensation is thereby achieved.

The direct polycondensation of the reactants is accomplished in the presence of a catalytic amount of a metal catalyst, wherein the metal is selected from the group consisting of the metals of Groups IV and V of the Periodic Table. The catalyst is a salt, oxide or organo-metallic derivative of either antimony, titanium, tin or germanium, with tin compounds being the most preferred for reasons of catalyst activity.

Representative examples of suitable catalysts, without being limited thereto, include the dialkyl tin oxides such as dibutyl and dimethyl tin oxide, diaryl tin oxides such as diphenyl tin oxide, dialkyl tin esters such as dibutyl tin diacetate, stannous sulphate, stannous oxalate, n-butyl stannoic acid, dimethoxy tin, titanium dioxide, titanium alkoxides, tetrabutyl titanate, tetraisopropyl titanate, tetraphenyl titanate, dicyclopentadienyldiphenyl titanium, antimony trioxide and germanium dioxide. Dialkyl tin diacetate is the most preferred catalyst.

The amount of catalyst employed is a catalytically effective amount, which is an amount sufficient to increase the rate of polymerisation, which can be measured by conventional means such as the inherent viscosity of the resulting polyester. The quantity of catalyst utilized is in the range of from 0.001 to 5 weight percent based upon the total monomer reactant weight, with from 0.01 to 1.0 weight percent being preferred, and from 0.05 to 0.5 weight percent being most preferred.

The hydroxynaphthoic acid and hydroxybenzoic acid reactants of the instant invention may have some additional substitution on the aromatic rings beside the hydroxy and carboxyl moieties. Such optional substitution may be with substituents inert in the polymerisation reaction, e.g. alkyl, alkoxy, aryl, halo and mixtures thereof. When the substituent is an alkyl or alkoxy, it preferably contains from 1 to about 4 carbons. When the substituent is an aryl, it preferably contains from 6 to 10 carbons (e.g. phenyl). When the substituent is a halogen, it may be fluorine, chlorine, bromine or iodine. The presence of such ring substituents can tend to modify to some extent the physical properties of the resulting polyester polymer, e.g. the polymer may soften at a lower temperature, its impact strength may be improved, and the crystallinity of the solid polymer formed may be decreased. The specific properties desired in the polyester product will influence the choice of substituents on the hydroxy naphthoic acid reactant. In a preferred embodiment, 6-hydroxy-2-naphthoic acid without any further ring substitution is employed in order to provide a polyester of optimum crystallinity in the solid state.

Representative examples of substituted hydroxy naphthoic acid reactants include: 6-hydroxy-5-chloro-2-naphthoic acid, 6-hydroxy-5-methyl-2-naphthoic acid, 7-hydroxy-5-methoxy-2-naphthoic acid, 6-hydroxy-7-chloro-2-naphthoic acid, 6-hydroxy-4,7-dichloro-2-naphthoic acid, etc, and mixtures thereof.

The amount of hydroxynaphthoic acid employed can vary greatly, but is generally within the range of from 10 to 90 mole percent of the total monomer reactants. When the hydroxynaphthoic acid is used in conjunction with a hydroxybenzoic acid it is preferred to use from 15 to 35 mole percent, and most preferably in the range from 20 to 30 mole percent, e.g. approximately 25 mole percent of the hydroxy naphthoic acid. When the hydroxynaphthoic acid is used in conjunction with aromatic diacids and aromatic diols it is preferred to use from 20 to 80 mole percent, more preferably 60 to 80 mole percent of the hydroxynaphthoic acid.

If desired, a mixture of hydroxynaphthoic acids may be employed.

Although it is preferred to use unsubstituted p-hydroxybenzoic acid in order to provide a resulting polyester of optimum crystallinity in the solid state then hydroxybenzoic acids can be used. Representative examples of other suitable hydroxybenzoic acid reactants include 3-chloro-4-hydroxybenzoic acid, 2-chloro-4-hydroxybenzoic acid, 2,3-dichloro-4-hydroxybenzoic acid, 3,5-dichloro-4-hydroxybenzoic acid, 2,5-dichloro-4-hydroxybenzoic acid, 3-bromo-4-hydroxybenzoic acid, 3-methyl-4-hydroxybenzoic acid, 3,5-dimethyl-4-hydroxybenzoic acid, 2,6-dimethyl-4-hydroxybenzoic acid, 3-methoxy-4-hydroxybenzoic acid, 3-,5-dimethoxy-4-hydroxybenzoic acid, etc.

The amount of hydroxybenzoic acid employed in conjunction with the hydroxynaphthoic acid can vary greatly, but is generally within the range of from 10 to 90 mole percent of the total monomer reactants, more preferably in the range from 65 to 85 mole percent, and most preferably in the range from 70 to 80 mole percent, e.g. approximately 75 mole percent.

If desired, a mixture of hydroxybenzoic acids may be employed, for example, a mixture of a p-hydroxybenzoic acid and m-hydroxybenzoic acid.

The aromatic dicarboxylic acid or aromatic diol reactants of the instant invention can contain one or more aromatic rings, with the carboxy groups being attached to the same or different rings. When the aromatic compounds contain more than one aromatic ring, the rings may be fused, e.g. as in a naphthalene or anthracene moiety or connected by a bond or a divalent radial such as an alkyl, oxy, thio or thionyl or sulphonyl radical. The dicarboxylic acid or diol is preferably symmetrical in the sense that the carboxyl or hydroxyl groups are symmetrically disposed, e.g. para to each other when on one aromatic ring or diagonally disposed, i.e. 2 and 6 positions, when present on a naphthalene ring. If desired, the aromatic ring or rings may bear one or more substituents, such as an alkyl, halo, alkoxy or aryl substituent, which is inert in the polymerisation reaction. When the substituent is an alkyl or alkoxy, it preferably contains from 1 to about 4 carbons. When the substituent is an aryl, it preferably contains from 6 to 10 carbons (e.g. phenyl), and when the substituent is a halogen, it may be fluorine, chlorine, bromine or iodine.

The amounts of aromatic dicarboxylic acid or aromatic diol, when employed, can vary greatly and will depend upon the type of properties the polyester product is to possess. In forming an anisotropic, melt-processable polyester, however, it is preferred that the amount of aromatic dicarboxylic acid or aromatic diol used is from 5 to 45 mole percent of the total monomer reactants, more preferably from 10 to 40 mole percent, and most preferably from 10 to 20 mole percent. A slight excess of aromatic diol can be used to compensate for any loss by volatilisation or sublimation.

Representative examples of suitable aromatic dicarboxylic acids for purposes of the instant invention include terephthalic acid, isophthalic acid, 2,6 and 2,7-naphthalene dicarboxylic acids, 4,4'-biphenyldicarboxylic acid, 4,4'-p-oxydibenzoic acid, 4,4'-p-thiodibenzoic acid, 4,4'-p-thionydibenzoic acid, and mixtures thereof. A particularly preferred aromatic dicarboxylic acid is terephthalic acid.

Representative examples of suitable aromatic diols include hydroquinone, resorcinol, methylhydroquinone, chlorohydroquinone, bromohydroquinone, phenylhydroquinone, 4,4'-biphenol, 4,4'-p-oxybiphenol, 4,4'-p-methylbiphenol, 4,4'-sulphonylbiphenol, 2,6-dihydroxynaphthalene, etc, and mixtures thereof. A particularly preferred aromatic diol is hydroquinone.

In general, it is preferred to conduct the reaction of the instant invention under conventional conditions for melt polymerisation, with the reaction being conducted in the presence of a catalytic amount of a suitable metal catalyst. The time, temperature and pressure conditions to be employed for optimum results depends on the specific reactants used and on the specifically selected catalyst. It is important, however, that the reactants and the resulting polymer suffer no substantial degradation under the polymerisation conditions.

The temperature must be at least high enough so that melt polymerisation may be carried out, i.e. so that at least one of the reactants and the aromatic polyester polymer product is in a melt phase. Temperatures in the range of from 250°C to 360°C can generally be employed, with a temperature in the range from 260°C to 350°C being preferred, and a temperature in the range from 270°C to 340°C being most preferred. However, the temperature should ordinarily not be so great as to cause degradation of the polymer as may be observed from undue darkening of the polymer.

If desired, a vacuum can be applied at a suitable place in the polymerisation to rapidly remove water and to hasten the polymerisation after sufficient reaction has taken place so that the loss of reactants through sublimation or other means is minimised. Other than during the vacuum cycle, the reaction is conducted generally at atmospheric pressure, although this may vary if desired. Also, to minimise oxidation, the reaction is preferably carried out in an inert atmosphere such as nitrogen or argon.

Other polymerisation techniques, however, e.g. a slurry polymerisation, such as that described in commonly assigned United States Patent No. 4 067 852 of Gordon W Calundann, entitled "Melt Processable Thermotropic Wholly Aromatic Polyester Containing Polyoxybenzoyl Moiety" where the solid product is suspended in a heat exchange medium, may also be employed.

The reaction is generally conducted until the desired molecular weight (for example, for fibre forming) has been reached. Preferably, the wholly aromatic polyesters of the present invention would have a weight average molecular weight in the range from 2000 to 200,000, more preferably from 10,000 to 50,000, and most preferably from 20,000 to 25,000. The molecular weight may be determined by standard techniques not involving the solutioning of the polymer, e.g. by end group determination via infra-red spectroscopy on compression moulded films. Alternatively, light scattering techniques in a pentafluorophenol solution can be employed to determine the molecular weight.

The inherent viscosity (i.e. IV) of the polyester can also be measured, and is preferably at least 250 cm$^3$/g (2.5 dl/g) and more preferably at least 350 cm$^3$/g (3.5 dl/g) e.g. from 350 cm$^3$/g to 750 cm$^3$/g (3.5 dl/g to 7.5 dl/g) when dissolved in pentafluorophenol at a concentration of 0.1 percent by weight at 60°C.

The polyester formed by the process of the present invention is easily melt processable.

Unlike the aromatic polyesters commonly encountered in much of the prior art, the wholly aromatic polyester formed is not intractable and forms an anisotropic melt phase whereby an atypical degree of order is manifest in the molten polymer. The resultant polyester readily forms liquid crystals in the melt phase and accordingly exhibits a high tendency for the polymer chains to orient in the shear direction. Such anisotropic properties are manifest at a temperature which is amenable for melt processing to form shaped articles. Such order in the melt may be confirmed by conventional polarised light techniques whereby crossed polarisers are utilised. More specifically, the anisotropic melt phase may conveniently be confirmed by the use of a Leitz polarising microscope at a magnification of 40× with the sample on a Leitz hot stage and under a nitrogen atmosphere. The polymer melt is optically anisotropic, i.e. it transmits light when examined between crossed polarisers. The amount of light transmitted increases when the sample is sheared (i.e. is made to flow), however, the sample is optically anisotropic even in the static state.

The present invention provides one with a more economically attractive and direct, yet efficient, method for preparing such wholly aromatic melt-processable polyesters than has previously been known. The use of acetylated reactants and the disadvantages thereof are avoided by the process of the instant invention. The present invention, therefore, allows one to prepare said valuable polyesters of aromatic hydroxy acids (e.g. a hydroxynaphthoic acid and a hydroxybenzoic acid) much more cheaply and easily so that their advantages may be more readily exploited.

The following examples are given as specific illustrations of the claimed invention. It should be understood, however, that the specific details set forth in the examples are merely illustrative and in no way limiting. All parts and percentages in the examples and the remainder of the specification are by weight unless otherwise specified.

Example 1

This example illustrates the preparation of a wholly aromatic copolyester from 4-hydroxybenzoic acid and 6-hydroxy-2-naphthoic acid.

A 300 ml 3-neck flask was fitted with a sealed glass paddle stirrer, a gas inlet and distillation head plus condenser and a graduated receiver. The flask was charged with 27.6 gm of 4-hydroxybenzoic acid (0.2 mole) and 56.4 gm of 6-hydroxy-2-naphthoic acid (0.3 mole). Catalyst (as indicated in Table 1 below) was added in various amounts based on the total charge. The flask was sparged with argon, then heated at 300°C for one hour in an oil bath under a slow stream of argon.

Initially, the melt was clear and straw-coloured, but water rapidly distilled out and the melt went first cloudy, then opaque. The water steadily distilled over, and the temperature was raised to 320°C for 90 minutes by which time the melt was quite viscous. Vacuum (0.66 mbar i.e. 0.66 hPa) was then applied for one hour. A total of 13 to 14 mls (72—77% of theory) of water generally collected in the receiver, accompanied by a small amount of phenol. The polymer colour was pale cream through yellow, depending on the particular catalyst used. Strong stiff fibres with a characteristic "woody" fracture could be drawn from the melt.

The polymer was broken from the flask, ground in a Wiley Mill and extracted with acetone for two hours in a Soxhlet apparatus to remove low molecular weight materials. The physical properties are set out in Table 1.

The polymer was then micro-melt spun through a single 0.175 mm (0.007 inch) hole spinneret, with fibre properties then being measured. The spinning conditions and fibre properties are set out in Table 2.

Table 1

| Run | Catalyst | Level | $T_m$[1] | IV $(cm^3/g)$ | Ratio[2] | Colour |
|-----|----------|-------|-------|--------------|----------|--------|
| 1 | Ti(OBu)$_4$ | 200 ppp | 295 | 530 | 36/64 | Yellow |
| 2 | n-BuSnO.OH[3] | 200 ppm | 342 | Insol[4] | 30/70 | Cream |
| 3 | n-BuSnO.OH[3] | 1800 ppm | 295 | 560 | 34/66 | Cream |
| 4 | n-BuSnO.OH[3] | 5200 ppm | 310 | 320 | 31/69 | Cream |

[1] $T_m$ by DSC endotherm peak.
IV as 0.1% solution (w/v) in pentafluorophenol at 60°C.
[2] Ratio of hydroxybenzoic acid/hydroxynaphthoic acid monomers actually present in final polymer, which was determined by calibrated Fourier Transform Infra-Red Spectroscopy on powdered polymer using the relative intensities of bands at 1510 cm$^{-1}$ (HBA unit) and 1470 cm$^{-1}$ (HNA unit). This method is accurate to ±5%.
[3] n-butyl stannoic acid.
[4] Polymer was of extremely high molecular weight.

Table 2

| Run | Spinning Conditions | | | AS—Spun | | |
|-----|------|------------|----------------|-----------------------------|----------------------------|--------------------------------------|
| | Temp | Throughput | Windup Speed | Tenacity (gm per decitex) | Elongation (percent) | Tensile Modulus (gm per decitex) |
| 1 | 315°C | 0.42 gm/min | 421 m/min | 6.7 g/d | 1.5% | 517 g/d |
| 2 | 360°C | 0.42 gm/min | 519 m/min | 9.9 g/d | 2.5% | 555 g/d |
| 3 | 299°C | 0.42 gm/min | 355 m/min | 6.3 g/d | 1.7% | 484 g/d |
| 4 | 346°C | 0.42 gm/min | 341 m/min | 7.9 g/d | 2.1% | 495 g/d |

5

**0 088 546**

Example 2

A wholly aromatic copolyester was prepared in accordance with the procedure of Example 1 by reacting 34.5 gm (0.25 mole) 4-hydroxybenzoic acid and 47 gm (0.25 mole) 6-hydroxy-2-naphthoic acid. Dibutyl tin diacetate (1800 ppm on total charge) was used as a catalyst. The polymerisation was heated via an oil bath at 260°C for 30 min, 280°C for 30 min, 290°C for 30 min, 300°C for 30 min, and 320°C for 30 min. A vacuum (0.6 mbar i.e. 0.6 hPa) was then applied for 20 minutes at 320°C.

The melt was opaque, creamy and very viscous. Strong fibres could be drawn from the melt. A total of 15 ml water (83% theory) distilled out. The polymer was isolated as previously described in Example 1. The polymer had a Tm of 290°C determined by DSC and an IV of 460 cm³/g. The ratio of hydroxybenzoic acid to hydroxynaphthoic acid units was determined to be roughly 40:60 by FTIR.

The polymer was then melt-spin at 345°C at 0.42 g/min through a 0.175 mm (0.007 inch) hole and wound up at 75 m/min. The as-spun properties were determined to be:

> tenacity : 9.5 g/decitex
> elongation : 2.2 percent
> modulus : 652 g/decitex

After a heat-treatment in a relaxed state at 300°C for 4 hours, the properties were:

> tenacity : 16.8 g/decitex
> elongation : 3 percent
> modulus : 561 g/decitex

Example 3

A wholly aromatic copolymer or hydroxybenzoic acid and hydroxynaphthoic acid was prepared by reacting 48.3 g (0.35 mole) of 4-hydroxybenzoic acid with 28.2 g (0.15 mole) of 6-hydroxy-2-naphthoic acid. Dibutyl tin diacetate was used as the catalyst (1800 ppm on total charge). The reaction mixture was heated for 1 1/2 hours at 300°C and at 320°C for 30 minutes, by which time it was very viscous. Strong fibres were pulled from the melt. The total yield of water was 17 ml, (94% theory). The isolated polymer had a Tm of 240°C, an IV of 670 cm³/g and the FTIR analysis showed a hydroxybenzoic acid/hydroxynaphthoic acid ratio of approximately 65/35.

Comparative Example A

A copolymer of hydroxybenzoic acid and hydroxynaphthoic acid was prepared in accordance with the procedure of Example 1, but in the absence of a catalyst. The reaction was heated from 260°C to 310°C in increments of 10°C over 3 hours, and was concluded at 320°C under vacuum for 15 minutes. A total of 14 ml of distillate was collected, but this contained much phenol. The polymer was very dark in colour. No fibres could be drawn. The resulting polymer had an IV of 186 cm³/g, and the FTIR showed that the hydroxybenzoic acid to hydroxynaphthoic acid ratio was only 20/80. In other words, a very large proportion of the hydroxybenzoic acid had been lost by means of decarboxylation into phenol and carbon dioxide in the absence of a catalyst as employed in accordance with the instant invention.

Example 4

A 300 ml 3-neck flask was fitted with a sealed glass paddle stirrer, a gas inlet tube and a still-head and condenser. The flask was charged with:

| | |
|---|---|
| 6-hydroxy-2-naphthoic acid | — 46.4 gm, 0.3 mole |
| Hydroquinone | — 12.0 gm, 0.11 mole |
| Terephthalic acid | — 16.6 gm, 0.10 mole |
| Dibutyl tin diacetate (catalyst) | — 0.2 gm |

The system was purged by evacuation and flushed with argon three times, and then heated in an oil bath and stirred under a slow stream of argon at 280°C. Water slowly began to distil out of the melt. After one hour, a total of 2.6 mls of water (29% theory) had collected. The temperature was raised to 300°C for 30 minutes, then to 320°C for 30 minutes and finally to 340°C for 30 minutes. A total of 5 mls (56%) of water was collected. During the later stages of the reaction, sublimated solid was melted back into the reaction mixture with the aid of a hot air blower applied to the upper part of the still-head.

A vacuum (0.66 mbar i.e. 0.66 hPa) was then slowly applied and the mixture was heated and stirred under vacuum ast 340°C for a total of 95 minutes. The opaque melt grew more viscous until at the end of the vacuum cycle it was beginning to climb up the stirrer shaft. The vacuum was then released with argon and the stirrer being withdrawn from the tan coloured, opalescent melt. Long, stiff fibres could be drawn

6

from the molten polymer attached to the stirrer blade. The rest of the polymer was allowed to cool under argon, and then broken out of the flask and separated. Its inherent viscosity as a 0.1% solution in pentafluorophenol at 60°C was 315 cm$^3$/g. When subjected to differential scanning calorimetry (DSC), it showed a $T_m$ endotherm at 275°C. The polymer was then ground in a Wiley Mill.

The powdered polymer was melt spun through a single 0.175 mm (0.007 inch) spinneret hole at 300°C at a throughput of 0.14 gm/minute and was wound up at 101 metres/minute. The as-spun yarn had a:

tenacity of 6.8 grams per decitex

elongation of 1.1 percent

modulus of 730 grams per decitex, and a

decitex of 10.6

The physical properties of the as-spun fibres may be further enhanced by heating in an inert, such as nitrogen, atmosphere, e.g. at 300°C for about four hours.

**Claims**

1. A process for preparing a wholly aromatic polyester comprising reacting in the presence of 0.001 to 5% by weight of a metallic compound selected from the group consisting of a salt, oxide or organo-metallic derivative of antimony, titanium, tin or germanium at least one hydroxynaphthoic acid together with either:

a) at least one hydroxybenzoic acid, or

b) at least one aromatic dicarboxylic acid and at least one aromatic diol to form the aromatic polyester.

2. A process according to Claim 1 wherein the reaction temperature is sufficient to maintain at least one of the reactants and the resulting polyester in a melt phase.

3. A process according to Claim 2 wherein the catalyst is dialkyl tin diacetate.

4. A process according to any one of the preceding claims wherein the hydroxynaphthoic acid is 6-hydroxy-2-naphthoic acid.

5. A process according to any one of the preceding claims wherein the hydroxybenzoic acid is p-hydroxybenzoic acid.

6. A process according to any one of the preceding claims wherein the reaction temperature is in the range from 250°C to 360°C, preferably from 260°C to 350°C, most preferably from 270°C to 340°C.

7. A wholly aromatic polyester obtained from a process according to any one of Claims 1 to 6.

**Patentansprüche**

1. Verfahren zur Herstellung eines vollständig aromatischen Polyesters, dadurch gekennzeichnet, daß man mindestens eine Hydroxy-Naphtoesäure zusammen mit entweder:

(a) mindestens einer Hydroxybenzoesäure oder

(b) mindestens einer aromatischen Dicarbonsäure und mindestens einem aromatischen Diol zur Bildung des aromatischen Polyesters

in Gegenwart von 0,001 bis 5 Gew.-% einer metallischen Verbindung, ausgewählt aus der Gruppe von einem Salz, einem Oxyd oder einem organo-metallischen Derivat von Antimon, Titan, Zinn oder Germanium umsetzt.

2. Verfahren nach Anspruch 1, dadurch gekennzeichnet, daß die Reaktionstemperatur ausreichend ist, um mindestens eine der Reaktionskomponenten und der resultierenden Polyester in Schmelzphase zu halten.

3. Verfahren nach Anspruch 2, dadurch gekennzeichnet, daß man die Umsetzung in Gegenwart von Dialkylzinndiacetat als Katalysator durchführt.

4. Verfahren nach einem der vorhergehenden Ansprüche, dadurch gekennzeichnet, daß die Hydroxy-naphtoesäure 6-hydroxy-2-Naphtoesäure ist.

5. Verfahren nach einem der vorhergehenden Ansprüche, dadurch gekennzeichnet, daß die Hydroxybenzoesäure p-Hydroxybenzoesäure ist.

6. Verfahren nach einem der vorhergehenden Ansprüche, dadurch gekennzeichnet, daß die Reaktionstemperatur im Bereich von 250 bis 360°C, vorzugsweise von 260° bis 350°C und insbesondere von 270° bis 340°C liegt.

7. Vollständig aromatischer Polyester, erhalten nach einem Verfahren gemäß einem der Ansprüche 1 bis 6.

## 0 088 546

**Revendications**

1. Procédé de préparation d'un polyester complètement aromatique comprenant la réaction en présence de 0,001 à 5% en poids d'un composé métallique choisi dans le groupe comprenant un sel, un oxyde ou un dérivé organométallique d'antimoine, de titane, d'étain ou de germanium, d'au moins un acide hydroxynaphtoîque avec, soit
   a) au moins un acide hydroxybenzoîque, soit
   b) au moins un acide dicarboxylique aromatique et au moins un diol aromatique pour former le polyester aromatique.

2. Procédé suivant la revendication 1, caractérisé en ce que la température de réaction est suffisante pour maintenir au moins l'un des réactifs et le polyester résultant dans une phase fondue.

3. Procédé suivant la revendication 2, caractérisé en ce que le catalyseur est un diacétate de dialcoylétain.

4. Procédé suivant l'une quelconque des revendications 1 à 3, caractérisé en ce que l'acide hydroxynaphtoîque est l'acide 6-hydroxy-2-naphtoîque.

5. Procédé suivant l'une quelconque des revendications 1 à 4, caractérisé en ce que l'acide hydroxybenzoîque est l'acide p-hydroxybenzoîque.

6. Procédé suivant l'une quelconque des revendications 1 à 5, caractérisé en ce que la température de réaction est dans la gamme de 250° à 360°C, de préférence de 260 à 350°C et plus avantageusement de 270° à 340°C.

7. Polyester complètement aromatique obtenu à partir d'un procédé suivant l'une quelconque des revendications 1 à 6.

8